# EUROPÄISCHE PATENTANMELDUNG

(11) **EP 1 586 499 A1**
(43) Veröffentlichungstag der Anmeldung: **19.10.2005**
(21) Anmeldenummer: 04018646.2
(22) Anmeldetag: 06.08.2004
(51) Int. Cl.: B62J 6/02

(54) **Fahrradbeleuchtung**

(30) Priorität: 15.04.2004 DE 202004005912 U
(71) Anmelder: Hess, Axel, 53547 Hausen (DE)
(72) Erfinder: Hess, Axel, 53547 Hausen (DE)
(74) Vertreter: Wolf, Günter

(57) **Zusammenfassung**

Die Erfindung betrifft eine Frontbeleuchtung für Fahrräder, bestehend aus einem am Fahrradlenker anbringbaren Lampenhalter(1), an dem das Lampengehäuse (2) in vertikaler Richtung auf und ab schwenkbar gelagert ist.

Nach der Erfindung ist vorgesehen, daß der Lampenhalter (1) in Form eines mindestens eine oberseitige Komponentenaufnahme (3) aufweisenden Gehäuses (4) ausgebildet und dieses mit vor dem Gehäuse (4) eine Gabel (5) bildenden Fortsätzen (6) versehen ist, an deren freien Enden (7) das Lampengehäuse (2) gelagert ist.

## Beschreibung

Die Erfindung betrifft eine Frontbeleuchtung für Fahrräder, bestehend aus einem am Fahrradlenker anbringbaren Lampenhalter, an dem das Lampengehäuse auf und ab schwenkbar gelagert ist.

Derartige Fahrradbeleuchtungen sind hinlänglich bekannt und in Benutzung, so daß es diesbezüglich keines besonderen druckschriftlichen Nachweises bedarf. Bei den Lampenhaltern handelt es sich in der Regel um laschenartige Gebilde, an denen einerseits das Lampengehäuse angelenkt ist und die andererseits am Vertikal- oder auch am Querholm des Lenkers in geeigneter Weise befestigt werden können.
Sofern ein Fahrrad bspw. mit Kilometerzähler oder einem so genannten Fahrradcomputer ausgerüstet sein soll, sind dafür, soweit bekannt, separat am Lenker in ähnlicher oder gleicher Weise befestigbare Gehäuse erforderlich, es sei denn, was insbesondere für Kilometerzähler gilt, daß diese direkt in das Lampengehäuse integriert sind. Die Ausbildung solcher Accessoires in Form separat anbringbarer Gehäuse kommt dabei insbesondere für Nachrüstungszwecke in Betracht. Zu Letzterem sei bspw. auf das DE-A-201 15 816 U1 verwiesen, das ein an der Lenkstange zu befestigendes Handy mit einem integrierten Fahrradcomputer zum Gegenstand hat, das zudem auch noch eine Leuchtdiode mit enthalten kann.

Ausgehend von einer Frontbeleuchtung der eingangs genannten Art, liegt der Erfindung die Aufgabe zugrunde, eine solche Frontbeleuchtung bzw. deren Lampenhalter dahingehend umzugestalten und zu verbessern, daß dieser unabhängig vom eigentlichen Lampengehäuse Unterbringungsmöglichkeiten entweder von vornherein oder zu Nachrüstungszwecken bietet und Accessoirs der genannten Art keiner Separatgehäuse bedürfen und Separatbefestigungen für solche Separatgehäuse entbehrlich sind.

Diese Aufgabe ist mit einer Fahrradbeleuchtung der eingangs genanten Art nach der Erfindung dadurch gelöst, daß der Lampenhalter in Form eines mindestens eine oberseitige Komponentenaufnahme aufweisenden Gehäuses ausgebildet und dieses mit vor dem Gehäuse eine Gabel bildenden Fortsätzen versehen ist, an deren freien Enden das Lampengehäuse gelagert ist.

Mit dieser Lösung sind die gestellten Forderungen erfüllt. Bei der hier so genannten Komponentenaufnahme kann es sich dabei um noch näher zu erläuternde Gestaltungen handeln, die wahlweise einen Anbau bzw. ein Anstecken oder auch einen Einbau solcher Komponenten zulassen.

Im übrigen kommt die erfindungsgemäße Ausgestaltung einer Fahrradfrontbeleuchtung der Tendenz und Gegebenheit entgegen, die eigentlichen Lampengehäuse relativ klein auszubilden, die also insoweit keine ausreichend räumlichen Möglichkeiten bieten, darin Accessoires der genannten Art unterbringen zu können, zumal dabei ferner zu beachten ist, daß derartige Zusatzkomponenten gute Ablesbarkeit haben sollten.
Durch die erfindungsgemäße Ausgestaltung der Lampenhalterung in Form eines Zusatzgehäuses, das aber mit dem verstellbar bleibenden Lampengehäuse eine Einheit bildet, ist genügend Raum geschaffen, um einen Fahrradcomputer mit einem ausreichend großen und damit gut ablesbaren Monitor unterbringen zu können.

Vorteilhafte Weiterbildungen bestehen ansonsten noch in Folgendem:

Die hier sogenannte Komponentenaufnahme des Gehäuses kann in Form eines nach oben offenen Gefaches oder auch in Form einer Aufsteckaufnahme ausgebildet sein, wobei das nach oben offene Gefach des Gehäuses auch mit einem Deckel verschließbar ausgebildet sein kann.

Die lampenseitige Wand des Gehäuses ist zweckmäßig mit einer maulartig Ausnehmung versehen, an welche Ausnehmung der hintere Bereich des in diese eingreifenden Lampengehäuses angepaßt ausgebildet ist, was zu einer sehr kompakten Bauweise der ganzen Frontbeleuchtung führt.

Mit Rücksicht auf die beizubehaltende vertikale Schwenkbarkeit des eigentlichen Lampengehäuses ist dabei in der lampenseitigen Wand des Gehäuses mittig ein vertikal orientierter Kabeldurchgriffsschlitz angeordnet.

Was beim Ganzen die die Lampe haltenden Fortsätze betrifft, so sind diese vorteilhaft in Form eines Spannbügels ausgebildet, der in formangepaßten, sich mindestens in den Gehäuseflanken erstreckenden Nuten angeordnet ist, wobei der Spannbügel außerdem mit Lenkerbefestigungselementen versehen sein kann.
Abgesehen davon, daß dies eine vom Spannbügel separate und damit günstige Herstellung des Accessoirgehäuses zuläßt, kann bei dieser Ausführungsform auch in Betracht gezogen werden, ein Fahrrad zunächst nur mit diesen Spannbügel und der daran befestigten Lampe auszustatten, wobei dann später und, wenn gewünscht, ohne weiteres eine Nachrüstung mit dem Accessoirgehäuse erfolgen kann.
Zwingend ist dies jedoch nicht, d.h., das Gehäuse kann auch mit den die Lampe tragenden Fortsätzen eine integrale Einheit bilden, wobei dann das Gehäuse mit Lenkerbefestigungselementen ausgestattet ist.

Die erfindungsgemäße Fahrradfrontbeleuchtung und deren vorteilhaften Weiterbildungen und Ausführungsformen werden nachfolgend anhand der zeichnerischen Darstellung von Ausführungsbeispielen näher erläutert.
Die Darstellung zeigt
- Fig.1: schematisch und in Draufsicht die Grundbauform der Frontbeleuchtung;
- Fig.1A: die Grundbauform gemäß Fig.1 in Seitenansicht;
- Fig.2: die Frontbeleuchtung in Seitenansicht und in besonderer äußerer Formgestaltung;
- Fig.3: die Frontbeleuchtung gemäß Fig.2 in Draufsicht;
- FIG.4: schematisch einen Schnitt durch die Frontbeleuchtung längs Linie IV-IV in Fig.3;
- Fig.5: die Frontbeleuchtung in Seitenansicht und teilweise aufgebrochen und im Schnitt längs Linie V-V in Fig.3;
- Fig.6: in Seitenansicht eine bauliche Einzelheit;
- Fig.7: perspektivisch ein Ausführungsbeispiel eines in das Gehäusegefach auswechselbar einsetzbaren, kleinen Aufnahmebehälters.

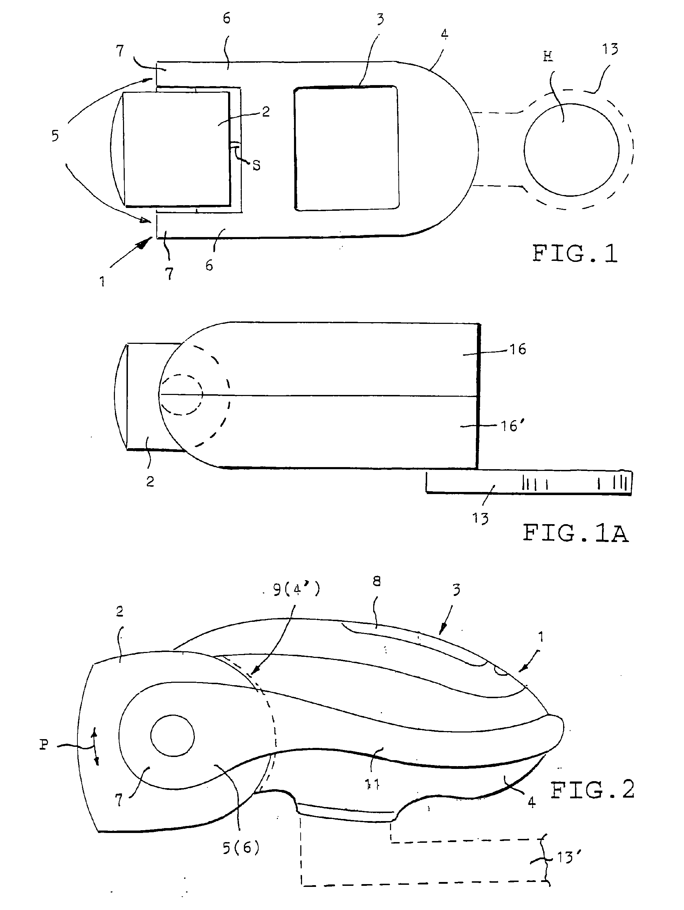

Die Frontbeleuchtung für ein Fahrrad besteht aus einem am Fahrradlenkerholm H anbringbaren Lampenhalter 1, an dem das Lampengehäuse 2 vertikal in Pfeilrichtung P (siehe Fig.2) schwenkbar gelagert und in gewünschter Stellung fixierbar ist.
Die in den Fig.2 bis 5 dargestellte äußere Formgebung der Frontbeleuchtung spricht nur besonders gefälligen Formgebungsanspüchen, d.h., dieses äußere Design ist keineswegs zwingend, was insoweit auch für das dargestellte Größenverhältnis zwischen Lampengehäuse 2 und Gehäuse 1 gilt.

Für die erfindungsgemäße Fahrradfrontbeleuchtung, und zwar unabhängig von der dargestellten äußeren Formgebung, ist unter Verweis zunächst auf Fig.1 nach der vorliegenden Erfindung wesentlich, daß der Lampenhalter 1 in Form eines mindestens eine oberseitige Komponentenaufnahme 3 aufweisenden Gehäuses 4 ausgebildet ist. Dieses Gehäuse 4 ist mit Fortsätzen 6 versehen, die eine Gabel 5 bilden, an deren freien Enden 7 das Lampengehäuse 2 schwenk- und fixierbar gelagert ist. Zur Fixierung des Lampengehäuses 2 dienen bspw. radial gerändelte Scheiben 17.

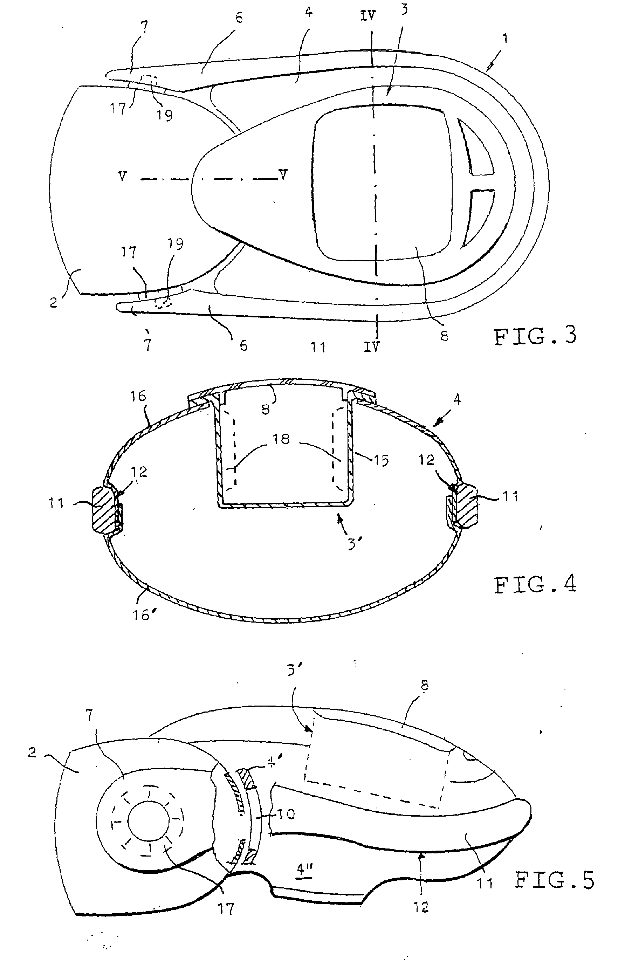

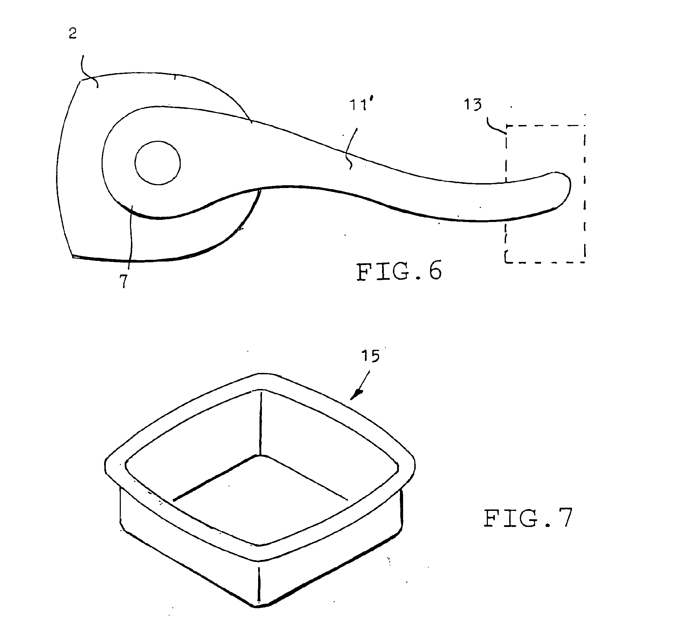

Was die hier so genannte Komponentenaufnahme 3 des Gehäuses 4 betrifft, so ist diese in Fig. 5 stark schematisiert in Form eines nach oben offenen Gefaches 3' nur gestrichelt angedeutet und mit einem vorzugsweise bspw. aus transparentem Material gebildeten Deckel 8 verschließbar. Beim oben offenen Gefach 3' kann es sich auch um auswechselbare Gebilde bspw. in Form ausreichend tiefer, in die Gefachöffnung 14 des Gehäuses 4 einsetzbarer Schalen 15 (siehe auch Fig.4 und 7) handeln, die zwar äußerlich gleich sind, innen aber unterschiedliche Formgestaltungen aufweisen können, um gegf. im Falle der Nach rüstung auch unterschiedliche, handelserhältliche Formgebungen von kleinen Computern oder Kilometerzählern aufnehmen zu können, die in geeigneter Weise in der jeweiligen Schale 15 bspw. durch entsprechend angepaßte Klemmfortsätz, Klemmstege od.dgl. fixierbar sein müssen. Da solche Halteelemente 18 die unterschiedlichsten Formen haben können, sind diese nicht besonders dargestellt bzw. nur schematisch und gestrichelt in Fig.4 angedeutet.

Mit Rücksicht auf die vertikale Einstellbarkeit des Lampengehäuses 2 ist, wie in Fig. 5 gestrichelt angedeutet, die lampenseitige Wand 4' des Gehäuses 4 mit einer maulartig Ausnehmung 9 versehen, an welche Ausnehmung 9 der hintere Bereich des in diese eingreifenden Lampengehäuses 2 angepaßt ausgebildet ist, wobei (siehe Fig.5) in der lampenseitige Wand 4' des Gehäuses 4 mittig ein vertikal orientierter Kabeldurchgriffsschlitz 10 angeordnet ist, um Scherbelastungen der vom

Lampengehäuse 2 in das Gehäuse 4 führenden Stromkabeln S (siehe Fig.1) zu vermeiden.

Aus den einleitend erwähnten Gründen sind die die Gabel 5 bildenden Fortsätze 6 vorteilhaft in Form eines Spannbügels 11 ausgebildet, der in formangepaßte, sich mindestens in den Gehäuseflanken 4" erstreckenden Nuten 12 des Gehäuses 4 eingreift.

Abgesehen davon, daß der Spannbügel 11 an seinen freien Enden 7 durch die Anlenkung des Lampengehäuses 2 in seiner Anlageposition am Gehäuse 1 gehalten wird, kann der Spannbügel 11 aber auch mit einer gewissen Vorspannung in den Nuten 12 des Gehäuses 1 eingeschnappt werden, was auch bevorzugt wird.

Sofern das Gehäuse 4, wie in Fig.2 gestrichelt und schematisch angedeutet, nicht selbst mit Lenkerbefestigungselementen 13' ausgestattet ist, besteht aber auch die Möglichkeit, gemäß Fig.6 den Spannbügel 11 mit Lenkerbefestigungselementen 13 zu versehen, und zwar bspw. in Form einer am vertikalen Lenkerholm H anzubringenden Spannhülse 13, wie dies auch schematisch in Fig.1 dargestellt ist.

Wie im schematisch dargestellten Schnitt nach Fig.4 verdeutlicht, ist das den Lampenhalter 1 bildende Gehäuse 4 vorteilhaft aus zwei zusammenfügbaren Halbschalen 16,16' gebildet, an denen auch im Bereich ihrer Zusammenfügung die Nuten 12 für die Schenkel 11' des Spannbügels 11 mit ausgeformt sind.

Die Ausbildung der die Gabel 5 bildenden Fortsätz 6 in Form eines einfach am Gehäuse 4 in dessen Nuten 12 anbringbaren Spannbügels 11 wird bevorzugt und hat den Vorteil, daß auch das mit kleinen Lagerzapfen 19 versehene Lampengehäuse 2 unter Spannung zwischen den Enden 7 des Spannbügels 11 gehalten wird. Sowohl am Lampengehäuse 2 als auch an den Enden 7 fest angeordnete, radial gerändelte Scheiben 17 werden dabei ebenfalls zusammengedrückt und halten das Lampengehäuse 2 in seiner eingestellten Position.

## Patentansprüche

1. Frontbeleuchtung für Fahrräder, bestehend aus einem am Fahrradlenker anbringbaren Lampenhalter(1), an dem das Lampengehäuse (2) in vertikaler Richtung auf und ab schwenkbar gelagert ist,
**dadurch gekennzeichnet,**
**daß** der Lampenhalter (1) in Form eines mindestens eine oberseitige Komponentenaufnahme (3) aufweisenden Gehäuses (4) ausgebildet und dieses mit vor dem Gehäuse (4) eine Gabel (5) bildenden Fortsätzen (6) versehen ist, an deren freien Enden (7) das Lampengehäuse (2) gelagert ist.

2. Frontbeleuchtung nach Anspruch 1,
**dadurch gekennzeichnet,**
**daß** die Komponentenaufnahme (3) des Gehäuses (4) in Form eines nach oben offenen Gefaches (3') ausgebildet ist.

3. Frontbeleuchtung nach Anspruch 1,
**dadurch gekennzeichnet,**
**daß** die Komponentenaufnahme (3) in Form einer Aufsteckaufnahme (3") ausgebildet ist.

4. Frontbeleuchtung nach Anspruch 2,
**dadurch gekennzeichnet,**
**daß** das nach oben offene Gefach (3') des Gehäuses (4) mit einem Deckel (8) verschließbar ausgebildet ist.

5. Frontbeleuchtung nach Anspruch 2 oder 4,
**dadurch gekennzeichnet,**
**daß** das Gefach (3') in Form einer auswechselbar in die Gefachöffnung (14) einsetzbaren Schale (15) ausgebildet ist.

6. Frontbeleuchtung nach einem der Ansprüche 1 bis 5,
**dadurch gekennzeichnet,**
**daß** die lampenseitige Wand (4') des Gehäuses (4) mit einer maulartig Ausnehmung (9) versehen ist, an welche Ausnehmung (9) der hintere Bereich des in diese eingreifenden Lampengehäuses (2) angepaßt ausgebildet ist.

7. Frontbeleuchtung nach einem der Ansprüche 1 bis 6,
**dadurch gekennzeichnet,**
**daß** in der lampenseitige Wand (4') des Gehäuses (4) mittig ein vertikal orientierter Kabeldurchgriffsschlitz (10) angeordnet ist.

8. Frontbeleuchtung nach einem der Ansprüche 1 bis 7,
**dadurch gekennzeichnet,**
**daß** die die Gabel (5) bildenden Fortsätze (6) in Form eines Spannbügels (11) ausgebildet sind, dessen Schenkel (11')in formangepaßten, sich mindestens in den Gehäuseflanken (4") erstreckenden Nuten (12) eingreifend angeordnet sind.

9. Frontbeleuchtung nach Anspruch 8,
**dadurch gekennzeichnet,**
**daß** der Spannbügel (11) mit Lenkerbefestigungselementen (13) versehen ist.

10. Frontbeleuchtung nach einem der Ansprüche 1 bis 8,
**dadurch gekennzeichnet,**
**daß** das Gehäuse (4) mit Lenkerbefestigungselementen (13') versehen ist.
